# EUROPÄISCHE PATENTSCHRIFT

(11) **EP 1 036 997 B1**
(45) Veröffentlichungstag und Bekanntmachung des Hinweises auf die Patenterteilung: **16.01.2008**
(21) Anmeldenummer: 00105338.8
(22) Anmeldetag: 16.03.2000
(51) Int. Cl.: F24H 1/00, H01M 8/04

(54) **Brennstoffzellen-Heizgerät**
Fuel cell heating device
Appareil de chauffage avec pile de combustion

(30) Priorität: 17.03.1999 AT 46799
(43) Veröffentlichungstag der Anmeldung: 20.09.2000
(73) Patentinhaber: Vaillant GmbH, 42859 Remscheid (DE)
(72) Erfinder: Bielski, Martin, 42859 Remscheid (DE); Thomas, Rolf, 42929 Wermelskirchen (DE)
(74) Vertreter: Hocker, Thomas

(56) Entgegenhaltungen:
- EP-A- 0 486 911
- US-A- 5 041 344

## Beschreibung

Die Erfindung bezieht sich auf ein Brennstoffzellen-Heizgerät gemäß dem Oberbegriff des Anspruches 1. Ein solches Gerät ist aus der EP-A1-0486911 bekannt.

Bekannte Brennstoffzellenanordnungen werden in der Regel zur Stromerzeugung eingesetzt, wobei die anfallende Wärme in der Regel an die Umgebung abgegeben wird. Dabei ist für den Wechselrichter, bzw. dessen Gehäuse eine eigene Kühleinrichtung vorgesehen. Dies führt dazu, daß für die gesamte Anlage zwei Kühleinrichtungen vorhanden sein müssen.

Ziel der Erfindung ist es, diesen Nachteil zu vermeiden und ein Gerät der eingangs erwähnten Art vorzuschlagen, das sich auch für Heizungszwecke eignet und sich durch einen einfachen Aufbau auszeichnet.

Erfindungsgemäß wird dies bei einem Brennstoffzellen-Heizgerät der eingangs erwähnten Art durch die kennzeichnenden Merkmale des Anspruches 1 erreicht.

Durch die Anordnung des Gehäuses des Wechselrichters an einer Endplatte des Stapels von Brennstoffzellen und die Einbeziehung dieser Endplatte in die Kühlung des Stapels erübrigt sich eine separate Kühleinrichtung für das Gehäuse des Wechselrichters.

Außerdem kann dadurch auch die gesamte beim Betrieb des Brennstoffzellen-Heizgerätes anfallende Wärme durch Nutzung der beim Betrieb der Brennstoffzellen und des Wechselrichters anfallenden Wärme für Heizzwecke genutzt werden. Dazu ist es lediglich erforderlich die Brennstoffzellen in einer Weise zu betreiben, daß diese eine ausreichend hohe Temperatur erreichen.

Durch die Merkmale des Anspruches 2 ergibt sich der Vorteil, daß das Gehäuse des Wechselrichters und damit die empfindlichen Halbleiter besonders gut gekühlt werden.

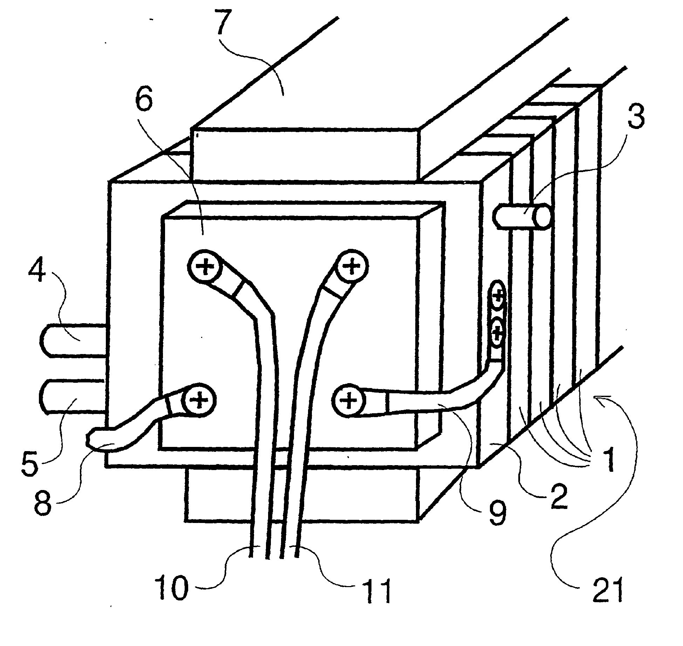

Die Erfindung wird nun anhand der Zeichnung näher erläutert, die schematisch ein erfindungsgemäßes Brennstoffzellen-Heizgerät zeigt.

Das Brennstoffzellen-Heizgerät weist einen Stapel 21 von Brennstoffzellen 1 auf, der mit Endplatten versehen ist, von denen nur die Endplatte 2 dargestellt ist.

An dieser Endplatte 2 ist ein Gehäuse 6 eines Wechselrichters befestigt, in dem Leistungshalbleiter untergebracht sind. Das Gehäuse 6 ist mit Anschlüssen 10, 11 zur Abnahme der Wechselspannung und Anschlüssen 8, 9 versehen, die mit Anschlüssen der Endplatte 2 und der gegenüberliegenden, nicht dargestellten Endplatte verbunden sind und zur Versorgung mit von den Brennstoffzellen 1 bereitgestellten Gleichspannung dienen.

Die Endplatte 2 ist weiter mit einem Kühlwasser-Einlaß 5, einem Abgasauslaß 4 und einem Gaseinlaß 3 versehen.

Der Stapel 21 von Brennstoffzellen 1 ist mit an beiden Seiten des Stapels 21 angeordneten Kühleinrichtungen 7 versehen, die sich auch über die Endplatte 2 erstrecken und hydraulisch mit der Endplatte 2, bzw. deren Kühlkanäle verbunden sind.

Im Betrieb des Brennstoffzellen-Heizgerätes werden die Brennstoffzellen 1 mit relativ hohler Temperatur betrieben und die Wärme der Brennstoffzellen 1 und die Wärme des Wechselrichters, bzw. dessen Gehäuse 6 mittels den Kühleinrichtungen 7 abgeführt und für Heizzwecke verwendet.

## Patentansprüche

1. Brennstoffzellen-Heizgerät mit einem mit Endplatten (2) versehenen Stapel (21) von Brennstoffzellen (1) der mit einer Kühleinrichtung (7) versehen ist, und einem in einem Gehäuse (6) angeordneten Wechselrichter, das ebenfalls mit gekühlt ist, **dadurch gekennzeichnet, daß** das Gehäuse (6) des Wechselrichters an einer Endplatte (2) des Stapels (21) von Brennstoffzellen (1) befestigt ist und mit diesem in einer gut wärmeleitenden Verbindung steht, wobei sich die Kühleinrichtung (7) des Stapels (21) von Brennstoffzellen (1) auch über die das Gehäuse (6) des Wechselrichters tragende Endplatte (2) erstreckt.

2. Brennstoffzellen-Heizgerät nach Anspruch 1, **dadurch gekennzeichnet, daß** der Einlaß (5) der Kühleinrichtung (7) in der das Gehäuse (6) des Wechselrichters tragenden Endplatte (2) angeordnet ist, wobei sich über den Stapel (21) von Brennstoffzellen (1) erstreckende Kanäle vorgesehen sind.

## Claims

1. A fuel cell heating apparatus comprising a stack (21) of fuel cells (1) which is provided with end plates (2) and with a cooling arrangement (7), and further comprising an inverter arranged in a housing (6) which is likewise cooled, **characterised in that** the housing (6) of the inverter is attached to an end plate (2) of the stack (21) of fuel cells (1) in such a manner that good heat conduction is ensured, with the cooling arrangement (7) of the stack (21) of fuel cells (1) also extending over the end plate (2) carrying the housing (6) of the inverter.

2. A fuel cell heating apparatus as claimed in Claim 1, **characterised in that** the inlet (5) of the cooling arrangement (7) is arranged in the end plate (2) which carries the housing (6) of the inverter, with provision being made for channels extending over the stack (21) of fuel cells (1).

## Revendications

1. Système de chauffage à piles à combustible avec un ensemble (21) de piles à combustible (1), muni d'éléments d'extrémité (2), et un onduleur installé dans un boîtier (6) également refroidi, **caractérisé par le fait que** le boîtier (6) de l'onduleur est monté sur un élément d'extrémité (2) de l'ensemble (21) de piles à combustible (1) et se trouve avec lui en liaison bien conducteur de chaleur, l'équipement refroidissant (7) de l'ensemble (21) de piles à combustible (1) s'étendant aussi sur l'élément d'extrémité (2) qui porte le boîtier (6) de l'onduleur.

2. Système de chauffage à piles de combustible suivant la revendication 1 **caractérisé par le fait que** l'entrée (5) de l'équipement refroidissant (7) où se trouve le boîtier (6), se trouve dans l'élément d'extrémité (2) où sont prévus des canaux qui s'étendent sur l'ensemble (21) de piles à combustible (1).
